**Europäisches Patentamt**

**European Patent Office**

**Office européen des brevets**

(19)

(11) Numéro de publication: **0 029 756**
**B1**

(12) # FASCICULE DE BREVET EUROPEEN

(45) Date de publication du fascicule du brevet:
**30.11.83**

(51) Int. Cl.³: **C 09 K 5/06**

(21) Numéro de dépôt: **80401454.6**

(22) Date de dépôt: **10.10.80**

(54) Procédé et dispositif pour la manutention et/ou le stockage du gallium à l'état métallique.

(30) Priorité: **06.11.79 FR 7927284**

(43) Date de publication de la demande:
**03.06.81 Bulletin 81/22**

(45) Mention de la délivrance du brevet:
**30.11.83 Bulletin 83/48**

(84) Etats contractants désignés:
**CH DE FR GB LI NL**

(56) Documents cités:
**FR - A - 2 417 065**
**US - A - 2 989 856**

(73) Titulaire: **RHONE-POULENC SPECIALITES CHIMIQUES,**
**"Les Miroirs" 18, Avenue d'Alsace, F-92400 Courbevoie**
**(FR)**

(72) Inventeur: **Bontempelli, Jean-Claude, 23, rue Maurice**
**Denis, 94500-Champigny (FR)**

(74) Mandataire: **Dutruc-Rosset, Marie-Claude et al, RHONE**
**POULENC RECHERCHES Service Brevets Chimie et**
**Polymères 25, Quai Paul Doumer, F-92408 Courbevoie**
**Cedex (FR)**

BUNDESDRUCKEREI BERLIN

Procédé et dispositif pour la manutention et/ou le stockage du gallium à l'état métallique

La présente invention a pour objet un procédé et un dispositif pour protéger de la chaleur du milieu extérieur le gallium à l'état métallique lors de sa manutention et/ou de son stockage.

La manutention du gallium à l'état métallique est délicate car celui-ci fond à 29,78°C. Pour les multiples applications du gallium et, en particulier, du gallium métallique très pur utilisé dans l'industrie électronique, il s'avère avantageux d'éviter que le gallium ne fonde lors de sa manutention et/ou de son stockage et, en particulier, au cours de son transport entre le lieu de sa production et celui de son utilisation.

Jusqu'à présent, l'usage était de protéger le gallium métallique de la chaleur du milieu extérieur lors de sa manutention et/ou de son stockage en isolant thermiquement celuici au moyen d'emballages en matière plastique et, en particulier, en polystyrène expansé et en assurant le maintien d'une température basse avec de la glace carbonique. Cette solution se révèle cependant mal adaptée lorsque la température du milieu extérieur dépasse la température de fusion du gallium, en particulier de façon intermitente, et lorsque la manutention et le stockage du gallium s'effectuent sur une période de temps dépassant quelques jours.

On connaît par ailleurs selon FR-A-2 417 065 des thermoblocs destinés à maintenir la température de produits conservés dans une gamme de température prédéterminée comportant un récipient scellable contenant une substance choisie parmi le groupe de l'oxyde de dentérium, du cyanure d'undécyle, de l'acide 4-bromo-décanoique et de l'acide 2-bromo-décanoique.

La demanderesse a mis au point un procédé et un dispositif qui rémédient aux inconvénients présentés par ceux de l'usage antérieur et qui permettent notamment de protéger le gallium de la chaleur du milieu extérieur lors de sa manutention et/ou de son stockage et, en particulier, au cours de son transport, ceci à des temperatures dépassant la température de fusion du gallium, en particulier de façon intermitente, et pendant des périodes de temps supérieures à plusieurs jours.

La présente invention concerne en effet un procédé pour protéger de la fusion le gallium à l'état métallique lors de sa manutention et/ou de son stockage, dans lequel on met en oeuvre des moyens pour réaliser autour du gallium une enceinte isolée thermiquement du milieu, caractérisé en ce que l'on met en oeuvre à l'intérieur de l'enceinte un composé présentant une température de début de fusion comprise entre 20°C et 29,70°C et ci-après dénommé »le composé«.

La présente invention concerne également un dispositif de mise en oeuvre du procédé décrit ci-dessus. Ce dispositif est caractérisé en ce qu'il comporte une envelope étanche contenant le composé présentant une température de fusion comprise entre 20 et 29,70°C, et une enceinte fermée protégeant thermiquement l'ensemble du milieu extérieur.

Le gallium métallique mis en oeuvre peut être sous n'importe quelle forme et, en particulier, sous forme de billes, de lingots ou contenu dans des flacons.

Le composé présentant une température de début du fusion comprise entre 20°C et 29,70°C est un corps solide ou cristallisé, il doit être, bien entendu, non toxique, non corrosif et non explosif. En fondant, le composé absorbe de la chaleur et maintient le milieu ambiant contenant le gallium à une température très proche de celle de son point de fusion. Le composé du procédé de l'invention constitue donc un volant thermique dont la fonction n'entre en jeu que si la température du milieu ambiant tend à s'élever au-dessus de cette température de fusion. Ainsi, si la température du milieu ambiant reste inférieure à son point de fusion, le rôle de volant thermique reste en réserve contrairement à la pratique habituelle selon laquelle on utilise comme volant thermique de la glace carbonique dont la température de changement d'état est très basse et qui se sublime quelles que soient les températures extérieures habituelles, ceci constitue un avantage supplémentaire du procédé selon l'invention par rapport à l'art antérieur.

Les composés que l'on peut mettre en oeuvre selon le procédé de l'invention sont notamment:

> l'acide 2-éthoxy-benzoïque,
> le 1,4-diaminobutane,
> le 1,4-butanediol,
> le cyclohexanol,
> le 1-méthyl-cyclohexanol,
> le 2,3,3-triméthyl-cyclohexanol,
> le 1-dodécanol,
> le 2-dodécanone,
> le fer(III)bromure-hexahydraté,
> le glycérol,
> le 6-undécanol,
> l'heptadécane,
> le 1,7-heptanediol,
> l'isoquinoléine,
> le nitrate de manganèse,
> le butyl octadécanoate,
> l'isobutyl octadécanoate,
> l'isopropyl octadécanoate,
> le 3-méthyl butyl octadécanoate,
> le propyl octadécanoate,
> le potassium fer(III) sulfate dihydraté.

Selon une forme de mise en oeuvre préférée du procédé de l'invention on utilise le nitrate de manganèse.

Le nitrate de manganèse mis en oeuvre est sous forme cristallisée; on utilise le nitrate de manganèse hexahydraté, qui correspond à une teneur en eau de 37,64% ou des compositions de nitrate de manganèse et d'eau contenant soit entre 34 et 42%en poids d'eau, soit entre 22 et 24% en poids d'eau; on utilise de préférence le nitrate de manganèse hexahydraté ou des compositions de nitrates de manganèse et d'eau contenant respectivement 23% et 36% en poids d'eau qui correspondent à deux compositions eutectiques du nitrate de manganèse.

Selon une variante du procédé de la présente invention, on peut mettre en oeuvre des moyens pour protéger le gallium à l'état métallique contre la pollution. Ces moyens constituent un emballage de contact du gallium. Dans des formes préférées de réalisation du procédé selon l'invention, ces moyens sont notamment constitués par des enveloppes ou des sachets en matériaux composites tels que par exemple ceux en aluminium, polyéthylène, par des tubes, ampoules, sachets ou enveloppes en matière plastique comme par exemple le polyéthylène, le polypropylène . . .

Selon une autre variante du procédé de l'invention, le gallium à l'état métallique éventuellement dans son emballage de contact peut être entouré de morceaux de matière plastique en particulier des morceaux de polystyrène expansé pour renforcer l'isolation thermique et constituer un calage du gallium dans l'ensemble du dispositif.

Le composé mis en oeuvre est disposé dans une enveloppe contenue dans une enceinte fermée protégeant thermiquement l'ensemble du milieu extérieur. L'enveloppe utilisée doit être étanche pour éviter la pollution de l'enceinte du gallium par ledit composé et doit, de préférence, présenter un coefficient global d'échange thermique supérieur à celui de l'emballage de contact du gallium lorsqu'il existe. Selon un mode de mise en oeuvre préféré cette enveloppe est constituée de matériaux métalliques ou de matière plastique et plus particulièrement de polyéthylène.

La quantité de composé mise en oeuvre peut varier dans de larges limites, et est, en particulier, fonction de la durée de la manutention et/ou du stockage, des conditions de température du milieu extérieur et des caractéristiques de l'enceinte.

Le gallium et l'enveloppe étanche contenant le composé sont disposés à l'intérieur d'une enceinte fermée protégeant thermiquement l'ensemble du milieu extérieur. Dans une forme de réalisation préférée de l'invention, l'enceinte est constituée de matière plastique et, en particulier, de polystyrène expansé.

L'épaisseur des parois de l'enceinte protégeant thermiquement l'ensemble du milieu extérieur peut varier dans de larges limites et est, en particulier, fonction de la durée de la manutention et/ou du stockage, des conditions de température du milieu extérieur.

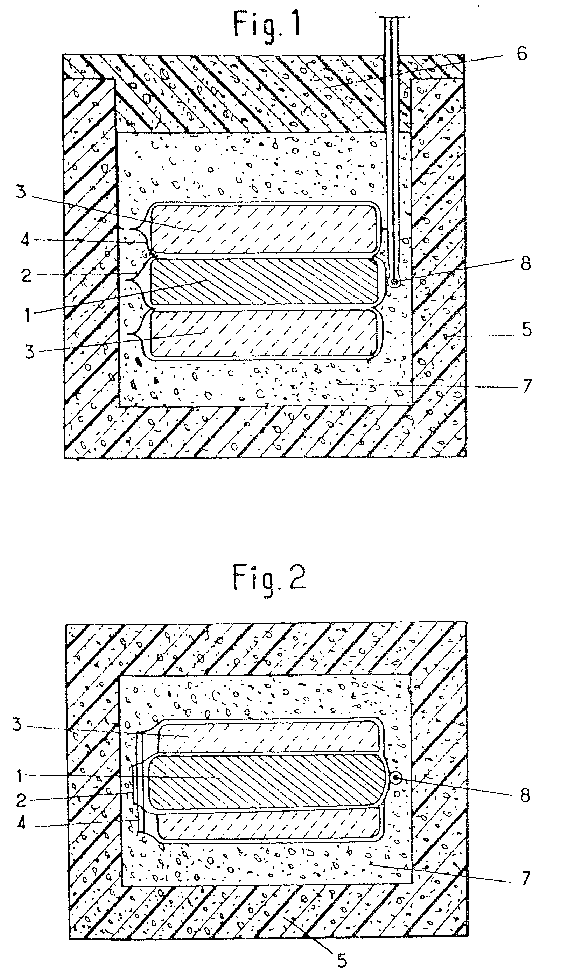

Le dispositif selon la présente invention va maintenant être décrit dans une forme de réalisation préférée en faisant référence aux figures 1 et 2 qui illustrent le dispositif selon une coupe horizontale et une coupe verticale.

Le gallium, 1, emballé dans son enveloppe, 2, en polyéthylène de 10/100 mm d'épaisseur est placé entre deux quantités de composé, 3, contenues dans une enveloppe en polyéthylène de 5/100 mm soudée. 4, L'ensemble est introduit dans une boîte en polystyrène expansé, 5, de 35 mm d'épaisseur et coiffée d'un couvercle à encastrement, 6, de 54 mm d'épaisseur, réalisé dans le même matériau. Comme il est montré sur la figure, cet ensemble est calé et quasiment immobilisé par un remplissage constitué par des morceaux de polystyrène expansé, 7, caractérisés par un poids de 5 g correspondant à un volume apparent de 1 litre.

Dans les exemples qui vont suivre et qui illustrent l'invention, les températures indiquées ont été repérées par un sonde thermométrique, 8, qui a été introduite au contact de 2 à travers un trou ménagé dans le couvercle 6, comme il est indiqué sur les figures. Cette sonde étant reliée à un enregistreur de température qui n'a pas été figuré sur les dessins, il est évidemment clair que cette sonde n'existe pas dans les dispositifs de l'invention dans leur utilisation réelle et habituelle.

Les exemples ci-après font référence aux figures annexées.

### Exemple 1

Un lingot de gallium de 1 kg, logé dans son enveloppe est introduit dans la boîte 5 à la température de 10°C et calé par les morceaux de polystyrène expansé 7 sans mettre à son contact un composé de protection. Après fermeture de la boîte 5 par le couvercle 6 et introduction de l'ensemble dans une étuve ventilée, maintenue à la température de 35°C, la température régnant au contact de 2 et indiquée par la sonde 8 est enregistrée. Quand cette température atteint 29,5°C à 30°C, l'état physique du gallium est vérifié toutes les heures pour préciser suffisamment le moment où commence la fusion du gallium. On constante que ce début de fusion intervient 5 h, après introduction du dispositif dans l'étuve.

### Exemple 2

#### Exemple selon l'invention

Un lingot de gallium de 1 kg, logé dans son enveloppe est introduit dans la boîte 5 à la température de 10°C, et, mis au contact de 2 sacs contenant chacun 1 kg d'une composition de nitrate de manganèse et d'eau à 58% en poids $Mn(NO_3)_2$ cristallisée et sortant d'une enceinte où ils ont été maintenus 24 heures à la température de 10°C. Après fermeture de la boîte 5 par le couvercle 6, et introduction de l'ensemble dans une étuve ventilée maintenue à la température de 35°C, la température régnant au contact de 2 et indiquée par la sonde 8 est enregistrée. Quand cette température atteint 29,5°C à 30°C, l'état physique du gallium est vérifié toutes les heures. On apprécie, comme dans l'exemple 1, le moment où le gallium commence à fondre. On constate que ce début de fusion intervient 41 heures après introduction du dispositif dans l'étude.

### Exemple 3

### Exemple selon l'invention

On opère dans les mêmes conditions que celles données à l'exemple 2, la composition de nitrate de manganèse et d'eau étant remplacée par du nitrate de manganèse hexahydraté Mn $(NO_3)_2$, 6 $H_2O$ à l'état cristallisé et sortant d'une enceinte où il a été maintenu à 10°C pendant 24 heures. Le dispositif est placé dans l'étuve à 35°C et l'expérience est poursuivie comme il est décrit à l'exemple 2. On constate que le début de fusion du gallium intervient 63 heures après introduction du dispositif dans l'étuve.

### Exemple 4

### Exemple selon l'invention

On opère dans les mêmes conditions que celles données à l'exemple 2, la composition de nitrate de manganèse et d'eau étant remplacée par l'eutectique Mn $(NO_3)_2$, 4 $H_2O$ — Mn $(NO_3)_2$, 2 $H_2O$ dont la composition correspond à une teneur en nitrate de manganèse anhydre de 77% en poids. Cet eutectique est introduit cristallisé comme dans les exemples 2 et 3 à la température de 10°C, puis le dispositif est placé dans l'étuve à 35°C. Au terme de l'expérience, on constate que le début de fusion du gallium intervient 84 heures après l'introduction du dispositif dans l'étuve.

### Exemple 5

### Exemple comparatif avec comme composé de protection de la glace carbonique

On opère dans les mêmes conditions que celles de l'exemple 2 en remplaçant le nitrate de manganèse par un volant thermique constitué par des blocs de glace carbonique ayant la forme de deux parallélépipèdes rectangles de 1 kg chacun. La surface d'échange thermique de ces blocs avec le milieu ambiant permet la sublimation de la glace carbonique de façon comparable à celle qui permet la fusion du nitrate de manganèse mis en oeuvre dans l'exemple 2. Les blocs de glace carbonique sont disposés comme les sacs de nitrate de mangénèse de l'exemple 2, de part et d'autre du lingot de gallium de 1 kg. Le dispositif est introduit dans l'étude à 35°C et un début de fusion du gallium est constaté après 40 heures de séjour.

### Revendications

1. Procédé pour protéger de la fusion le gallium à l'état métallique lors de sa manutention et/ou de son stockage, dans lequel on met en oeuvre des moyens pour réaliser autour du gallium une enceinte isolée thermiquement du milieu, caractérisé en ce que l'on met en oeuvre à l'intérieur de l'enceinte un composé présentant une température de début de fusion comprise entre 20°C et 29,70°C.

2. Procédé selon la revendication 1, caractérisé en ce que le composé est choisi parmi le groupe comprenant:

l'acide 2-éthoxy-benzoïque,
le 1,4-diaminobutane,
le 1,4-butanediol,
le cyclohexanol,
le 1-méthyl-cyclohexanol,
le 2,3,3-triméthyl-cyclohexanol,
le 1-dodécanol,
le 2-dodécanone,
le fer(III)bromure-hexahydraté,
le glycérol,
le 6-undécanol,
l'heptadécane,
le 1,7-heptanediol,
l'isoquinoléine,
le nitrate de manganèse,
le butyl octadécanoate,
l'isobutyl octadécanoate,
l'isopropyl octadécanoate,
le 3-méthyl butyl octadécanoate,
le propyl octadécanoate,
le potassium fer(III) sulfate dihydraté.

3. Procédé selon les revendications 1 ou 3, caractérisé en ce que le composé est le nitrate de manganèse cristallisé et, de préférence, le nitrate de manganèse hexahydraté, ou des compositions de nitrate de manganèse et d'eau contenant soit entre 34 et 42% en poids d'eau, soit entre 22 et 24% en poids d'eau.

4. Procédé selon la revendication 3, caractérisé en ce que les compositions de nitrate de manganèse et d'eau contiennent 23% ou 36% en poids d'eau.

5. Procédé selon la revendication 1, caractérisé en ce que, en outre, on met en oeuvre des moyens pour protéger le gallium à l'état métallique contre la pollution sous forme d'emballage de contact.

6. Procédé selon la revendication 5, caractérisé en ce que ces moyens sont constitués par des enveloppes ou des sachets en matériaux composites de préférence en aluminium, polyéthylène, par des tubes, ampoules, sachets ou enveloppes en matière plastique, de préférence en polyéthylène ou en polypropylène.

7. Procédé selon la revendication 1, caractérisé en ce que, en outre, le gallium à l'état métallique est entouré de morceaux de matière plastique et de préférence de billes de polystyrène.

8. Dispositif de mise en oeuvre du procédé selon l'une quelconque des revendications précédentes, comportant une enceinte fermée protégeant thermiquement l'ensemble du milieu extérieur, caractérisé en ce qu'il comporte une enveloppe étanche contenant le composé.

9. Dispositif selon la revendication 8, caractérisé en ce que l'enveloppe étanche est constituée de matériaux métalliques ou de matière plastique.

10. Dispositif selon la revendication 9, caractérisé en ce que l'enceinte est constituée de matière plastique et, en particulier, de polystyrène expansé.

## Patentansprüche

1. Verfahren zum Schutz von metallischem Gallium gegen Schmelzen bei seiner Handhabung und/oder Lagerung durch Einsatz von Mitteln, die um das Gallium eine thermisch gegen die Umgebung isolierte Zone schaffen, dadurch gekennzeichnet, daß man im Inneren der Zone eine Verbindung unterbringt, die einen Schmelzbeginn zwischen 20 und 29,7° C hat.

2. Verfahren nach Anspruch 1, dadurch gekennzeichnet, daß die Verbindung aus der folgenden Gruppe ausgewählt ist:

2-Äthoxy-Benzoesäure,
1,4-Diaminobutan,
1,4-Butandiol,
Cyclohexanol,
1-Methyl-cyclohexanol,
2,3,3-Trimethyl-cyclohexanol,
1-Dodecanol,
2-Dodecanon,
Eisen-III-bromid-Hexahydrat,
Glycerin,
6-Undecanol,
Heptadecan,
1,7-Heptandiol,
Isochinolin,
Mangannitrat,
Butyloctadecanoat,
Isobutyloctadeconoat,
Isopropyloctadecanoat,
3-Methyl-butyloctadecanoat,
Propyloctadecanoat,
Kalium-Eisen(III)sulfat-Dihydrat.

3. Verfahren nach Anspruch 1 oder 2, dadurch gekennzeichnet, daß die Verbindung aus kristallisiertem Mangannitrat und vorzugsweise Mangannitrat-Hexahydrat oder Zusammensetzungen von Mangannitrat und Wasser, die entweder zwischen 34 und 42 oder zwischen 22 und 24 Gewichtsprozent Wasser enthalten, besteht.

4. Verfahren nach Anspruch 3, dadurch gekennzeichnet, daß die Zusammensetzungen von Mangannitrat und Wasser 23 oder 36 Gewichtsprozent Wasser enthalten.

5. Verfahren nach Anspruch 1, dadurch gekennzeichnet, daß man zusätzlich Mittel in Form einer direkten Verpackung verwendet, um das metallische Gallium gegen Verschmutzung zu schützen.

6. Verfahren nach Anspruch 5, dadurch gekennzeichnet, daß diese Mittel aus Umhüllungen oder Beuteln aus Verbundwerkstoffen, vorzugsweise aus Aluminium und Polyäthylen, aus Tuben, Ampullen, Beuteln oder Hüllen aus Kunststoffen, vorzugsweise aus Polyäthylen oder Polypropylen, bestehen.

7. Verfahren nach Anspruch 1, dadurch gekennzeichnet, daß das metallische Gallium zusätzlich von Kunststoffteilchen und vorzugsweise von Polystyrolkügelchen umgeben ist.

8. Vorrichtung zur Durchführung des Verfahrens nach irgendeinem der vorangehenden Ansprüche, enthaltend eine geschlossene Zone, die das Ganze thermisch gegen die Umgebung schützt, dadurch gekennzeichnet, daß sie einen dichten Mantel aufweist, der die Verbindung enthält.

9. Vorrichtung nach Anspruch 8, dadurch gekennzeichnet, daß der dichte Mantel aus metallischen Werkstoffen oder Kunststoff besteht.

10. Vorrichtung nach Anspruch 9, dadurch gekennzeichnet, daß die Schutzzone aus Kunststoff und vorzugsweise aus geschäumten Polystyrol besteht.

## Claims

1. Process for protection gallium in the metallic state from melting when being handled and/or stored, which uses means for producing, around the gallium, an enclosure thermally insulated from the environment, characterised in that a compound having an initial melting point of between 20°C and 29.70°C is used inside the enclosure.

2. Process according to Claim 1, characterised in that the compound is chosen from amongst the group comprising:

2-ethoxybenzoic acid,
1,4-diaminobutane,
butane-1,4-diol,
cyclohexanol,
1-methylcyclohexanol,
2,3,3-trimethylcyclohexanol,
dodecan-1-ol,
dodecan-2-one,
iron(III)bromide hexahydrate,
glycerol,
6-undecanol,
heptadecane,
heptane-1,7-diol,
isoquinoline,
manganese nitrate,
butyl octadecanoate,
isobutyl octadecanoate,
isopropyl octadecanoate,
3-methylbutyl octadecanoate,
propyl octadecanoate
and potassium iron(III) sulphate dihydrate.

3. Process according to Claims 1 or 2, characterised in that the compound is crystalline manganese nitrate, preferably manganese nitrate hexahydrate, or compositions of manganese nitrate and water which contain either between 34 and 42% by weight of water or between 22 and 24% by weight of water.

4. Process according to Claim 3, characterised in that the compositions of manganese nitrate and water contain 23% or 36% by weight of water.

5. Process according to Claim 1, characterised in that, in addition, means for protecting the gallium in the metallic state against pollution are used, which are in the form of contact packaging.

6. Process according to Claim 5, characterised in that these means consist of envelopes or sachets made of composite materials, preferably aluminium and polyethylene, or of tubes, ampoules, sachets or envelopes made of plastic, preferably polyethylene or polypropylene.

7. Process according to Claim 1, characterised in that, in addition, the gallium in the metallic state is surrounded by pieces of plastic and preferably by polystyrene beads.

8. Device for carrying out the process according to any one of the preceding claims, comprising a sealed enclosure thermally protecting the assembly from the external environment, characterised in that it comprises a leaktight envelope containing the compound.

9. Device according to Claim 8, characterised in that the leaktight envelope consists of metallic materials or plastic.

10. Device according to Claim 9, characterised in that the enclosure consists of plastic and in particular of expanded polystyrene.

# Fig. 1

# Fig. 2